# EUROPÄISCHE PATENTSCHRIFT

(11) **EP 2 925 158 B1**
(45) Veröffentlichungstag und Bekanntmachung des Hinweises auf die Patenterteilung: **19.10.2016**
(21) Anmeldenummer: 13818675.4
(22) Anmeldetag: 27.11.2013
(51) Int. Cl.: A23L 19/00

(54) **OLIVENPASTE UND OLIVENPULVER**
OLIVE PASTE AND OLIVE POWDER
PÂTE ET POUDRE D'OLIVES

(30) Priorität: 27.11.2012 DE 102012023136
(43) Veröffentlichungstag der Anmeldung: 07.10.2015
(73) Patentinhaber: Pur'Oliv GBR, 74177 Bad Friedrichshall (DE)
(72) Erfinder: CARLE, Reinhold, 72657 Altenried (DE); KUHN, Rolf, 74177 Bad Friedrichshall (DE); RODEMEYER, Günther, 74206 Bad Wimpfen (DE)
(74) Vertreter: Held, Stephan
(86) Internationale Anmeldenummer: PCT/EP2013/074834
(87) Internationale Veröffentlichungsnummer: WO 2014/083042

(56) Entgegenhaltungen:
- EP-A1- 2 526 785
- WO-A1-2006/005986
- WO-A1-2007/042742
- WO-A2-2004/110171
- GUILLERMO RODRÍGUEZ ET AL: "Effect of Steam Treatment of Alperujo on the Composition, Enzymatic Saccharification, and in Vitro Digestibility of Alperujo", JOURNAL OF AGRICULTURAL AND FOOD CHEMISTRY, Bd. 55, Nr. 1, 1. Januar 2007 (2007-01-01) , Seiten 136-142, XP055117275, ISSN: 0021-8561, DOI: 10.1021/jf0616513
- J FERNANDEZ-BOLANOS: "Steam-explosion of olive stones: hemicellulose solubilization and enhancement of enzymatic hydrolysis of cellulose", BIORESOURCE TECHNOLOGY, Bd. 79, 1. Januar 2001 (2001-01-01), Seiten 53-61, XP055117613,
- DATABASE WPI Week 200276 Thomson Scientific, London, GB; AN 2002-704714 XP002277178, & KR 2002 0040930 A (LEE S W) 31. Mai 2002 (2002-05-31) in der Anmeldung erwähnt
- DATABASE WPI Week 199813 Thomson Scientific, London, GB; AN 1998-133044 XP002724246, & ES 2 110 912 A1 (GARCIA MORENO A) 16. Februar 1998 (1998-02-16)

## Beschreibung

### Technisches Gebiet

Die Erfindung betrifft ein Verfahren zur Herstellung einer Olivenpaste oder eines Olivenpulvers, das die Behandlung eines Oliventresters mit mindestens einem Enzym, das die Viskosität des Tresters um mindestens den Faktor 2 vermindert, und das Sieben des erhaltenen Produkts durch ein Sieb mit einer geeigneten Maschenweite um mindestens 98 Gew.-% der Olivensteinpartikel aus dem Produkt zu entfernen, umfasst. Die Verwendung der Olivenpaste oder des Olivenpulvers als Nahrungsmittel, Nahrungsergänzungsmittel oder als Zutat für Nahrungsmittel, wie insbesondere Backwaren, Aufstriche oder Pasta-Produkte, sowie in der Tiernahrung wird offenbart.

### Stand der Technik

Olivenöl ist ein Hauptbestandteil der sogenannten mediterranen Diät und wird wegen seines hohen Anteils an Ölsäure geschätzt, die mit einem reduzierten Risiko für Herzerkrankungen in Verbindung gebracht wird. 2010 wurden mehr als 3,2 Millionen Tonnen Olivenöl produziert, hauptsächlich in Mittelmeerstaaten, wie Spanien, das der größte Produzent ist. Die Herstellung von Olivenöl geht jedoch einher mit großen Mengen von flüssigen und festen Abfallstoffen. Die Menge der Abfallstoffe und ihre physikochemischen Eigenschaften hängen hauptsächlich vom Ölextraktionsverfahren ab, das für die Gewinnung von Olivenöl verwendet wird (Vlyssides et al., 1998). Während die Ölextraktion unter Verwendung hydrostatischer Pressen auf kleine Olivenmengen beschränkt ist, erlauben Drei-Phasen- oder Zwei-Phasen-Dekanter-Verfahren eine kontinuierliche Ölextraktion und ermöglichen verbesserte Ölausbeuten.

Ein Überblick über die in europäischen Olivenölmühlen verwendeten Technologien wurde von Roig et al. (2006) zusammengestellt. Beim Drei-Phasen-Dekanter-Verfahren fallen eine Festfraktion (Oliventrester = "orujo") und zwei flüssige Fraktionen (Olivenöl und sog. "alpechín", d. h. Abwasser, das von der vorangegangenen Zugabe von Wasser und Fruchtwasser herrührt) an. Bei der weiterentwickelten Technologie des Zwei-Phasen-Dekanter-Verfahrens entstehen nur zwei Fraktionen: Einerseits Nasstrester ("alpeorujo") und andererseits das Olivenöl als flüssige Fraktion.

Olivenabwasser, das nach dem traditionellen Pressen von zerkleinerten Oliven und dem Abdekantieren einer Emulsion, die aus Fruchtwasser und Olivenöl besteht, sowie der Flüssigphase ("alpechín"), die von der Drei-Phasen-Dekantierung einer Olivenmaische anfällt, enthalten große Mengen an organischen Materialien und niedermolekularen Verbindungen, die phytotoxische Eigenschaften aufweisen, und daher mit erheblichen Umweltbelastungen verbunden sind. Obwohl das Zwei-Phasen-Dekanter-Verfahren insgesamt als umweltfreundlicher angesehen wird, da kein Wasser zugegeben wird, führt der Trocknungsprozess vor einer zweiten Ölextraktion mit organischen Lösungsmitteln zu signifikant höheren Produktionskosten im Vergleich zum Drei-Phasen-Dekanter-Verfahren.

Neben dem kostenintensiven Entfernen von Wasser durch Verdampfen oder physiochemische Behandlungen der Abfallstoffe, wurde die mikrobiologische Fermentierung, ein anaerober Verdau zur Produktion von Biogas und die Kompostierung als Abfallbehandlung vorgeschlagen (Azabar et al., 2004).

Da die festen und flüssigen Olivenabfallfraktionen reich an Polyphenolen mit antioxidativer Aktivität sind, wurde deren Extraktion für unterschiedliche Anwendungen in der pharmazeutischen und kosmetischen Industrie vorgeschlagen (Roig et al., 2006). Weiterhin kann nach einer zweiten Ölextraktion und Trocknen der übrige Oliventrester für die Verbrennung genutzt werden. Die absolute Energieausbeute dieses Verfahrens ist jedoch relativ gering, da die meiste Energie, die durch das Verbrennen erzielt wird, für das Trocknen verwendet werden muss. Damit ist dieses Verfahren relativ unökonomisch.

In der US-A-5,801,127 wird die Verwendung eines Pulvers, das aus Olivenölnebenprodukten besteht, für Ölbohr-Anwendungen beschrieben.

Gemäß der KR-A-2002-040930 werden ganze Oliven gemahlen und mit Maismehl und Stärke vermischt, anschließend gefriergetrocknet und gemahlen. Dabei wird ein Pulver mit nahrhaften Eigenschaften erhalten.

Im letztgenannten Fall enthält das Produkt sowohl die essbaren Teile der Oliven (Mesocarp) als auch die lignifizierten, nicht verzehrfähigen Teile (Endocarp) der Olivensteinfrucht, also insbesondere die Olivensteine. Daher besteht das Haupthindernis für die Erschließung von Oliventrester für den menschlichen Verzehr in der Verunreinigung der Trester mit gemahlenen Olivensteinen und/oder Olivensteinpartikeln, die durch das Mahlen der ganzen Olivenfrucht (Olivensteinfrucht) vor der Ölextraktion durch Zentrifugieren bzw. Pressen entstehen. Der Olivensteinanteil im Trester kann dabei zwischen 35 und 70 % liegen und ist abhängig von der verwendeten Olivensorte.

Die EP 1 658 360 B1 beschreibt ein Verfahren zur Gewinnung von Öl aus Oliven und/oder Olivenbestandteilen, wobei die Kerne nicht entfernt oder abgetrennt werden. Die Oliven und/oder Olivenbestandteile werden dabei mit einem Enzym oder einer Enzymmischung, die mindestens eine Pektinesterase enthält, behandelt.

Die WO 2004/110171 beschreibt ein Mahlverfahren, in dem ein Olivenpulver durch Trocknen des festen Olivenabfallmaterials (Trester) erhalten wird, wobei ein getrockneter Trester gemahlen, gesiebt und anschließend bei tiefen Temperaturen von weniger als 10 °C gemahlen wird. Weil die Partikel eine Größe von weniger als 0,65 mm aufweisen, wird das erhaltene Olivenpulver als geeignet für den menschlichen Verzehr und als Lebensmittelprodukt angesehen, obwohl es immer noch einen signifikanten Anteil von gemahlenem, nicht verzehrfähigem Olivensteinmaterial enthält. Dies ist allerdings nicht ausreichend, um die Anforderungen eines Lebensmittels für den menschlichen Verzehr zu erfüllen, da Engelen et al. (2006) zufolge die sensorische Grenze mit der Olivensteinpartikel durch den menschlichen Gaumen als solche noch wahrgenommen werden können bei 25 µm liegt. Problematisch ist zudem, dass der getrocknete Oliventrester sehr klebrig ist. Daher ist es erforderlich, das Mahlen unter kryogener Kühlung durchzuführen, was technisch relativ aufwändig und mit erheblichen Energiekosten verbunden ist. Darüber hinaus erfordert das Trockensieben und die Herstellung eines Pulvers weitere Energie zum Trocknen unter Vakuum (10 mm Hg = 1,3 kPa), so dass dieser Prozess insgesamt für die Herstellung größerer Produktmengen wenig geeignet ist.

Da die in der WO 2004/110171 beschriebene Methode als geeignet zur Bereitstellung von für den menschlichen Verzehr geeigneten Olivenpulvern vorgeschlagen wird, jedoch noch einen hohen Anteil an Olivensteinpartikeln enthält, die zudem deutlich über der sensorisch akzeptablen Partikelgröße von 0,025 mm liegen, besteht ein Bedarf an weiterentwickelten und verbesserten Verfahren, mit denen es möglich ist, die Menge des nicht verzehrbaren Olivensteinmaterials im Produkt signifikant zu reduzieren und hinsichtlich der verbleibenden, restlichen Olivensteinpartikel eine Partikelgröße von < 0,025 mm zu erreichen. Weiterhin sollte ein solches Verfahren ohne energieintensive Verfahrensschritte, wie beispielsweise ein Vakuumtrocknen vor dem Sieben des getrockneten Materials zum Entfernen von Olivensteinen und/oder Olivensteinpartikeln und ein nachfolgendes kryogenes Mahlen, um die verbleibenden groben Olivensteinbestandteile zu zerkleinern, auskommen, und dennoch Produkte mit zumindest vergleichbaren Eigenschaften liefern. Dies gilt insbesondere mit Blick auf den hohen Energieverbrauch dieses Verfahrens und den dramatischen Anstieg der Energiekosten.

WO 2006/005986 offenbart ein Verfahren zur Herstellung eines Olivenpulvers, unter Verwendung von einer Ultrafiltrationsstufe.

### Darstellung der Erfindung

Erfindungsgemäß werden diese Aufgaben durch ein Verfahren zur Herstellung einer Olivenpaste oder eines Olivenpulvers gelöst, das die Behandlung von Oliventrester mit mindestens einem Enzym, das die Viskosität des Tresters um mindestens den Faktor 2 vermindert, und das Sieben des erhaltenen Produkts über ein Sieb mit einer geeigneten Maschenweite um mindestens 98 Gew.-% der Olivensteinpartikel aus dem Produkt zu entfernen umfasst. Die erhaltene Olivenpaste oder das Olivenpulver ist im Wesentlichen frei von Olivensteinpartikeln, so dass sichergestellt ist, dass das Produkt einen vernachlässigbar geringen Gehalt an Olivensteinmaterial aufweist und als Nahrungsmittel, Nahrungsergänzungsmittel oder als Zutat für ein Nahrungsmittel verwendbar ist. "Im Wesentlichen frei von Olivensteinpartikeln" bedeutet, dass mindestens 98 Gew.-% der Olivensteinpartikel entfernt sind und der Restanteil von < 2 % Olivensteinpartikeln eine Partikelgröße von < 0,4 mm, bevorzugt von < 0,075 bis 0,2 mm, besonders bevorzugt von < 0,025 bis 0,075 mm, und ganz besonders bevorzugt von < 0,025 mm aufweist. Die so erhaltene Olivenpaste bzw. Olivenpulver zeichnet sich durch ein exzellentes Mundgefühl aus, wenn es direkt konsumiert wird oder in Nahrungsmittelprodukte, wie Backwaren, Aufstrichen und Pasta oder Pasta-Produkten, sowie in Tiernahrung eingebracht wird.

Enzyme, die die Viskosität des Tresters vermindern, sind beispielsweise Cellulasen oder Hemicellulasen, die eine pektinabbauende Aktivität umfassen, oder Enzyme mit anderen Bezeichnungen, die zusätzlich zu Cellulase- oder Hemicellulase-Aktivitäten noch pektinabbauende Eigenschaften aufweisen. Solche Enzyme sind im Rahmen dieser Erfindung bevorzugt. Zusätzlich zu Cellulasen oder Hemicellulasen, oder Enzymen mit anderen Bezeichnungen, die zusätzlich eine Cellulase- oder Hemicellulase-Aktivität aufweisen, können Pektinasen oder Enzyme mit anderen Bezeichnungen (z. B. Polygalakturonasen und Pektatlyasen, auch in Kombination mit Pektinmethylesterasen, sowie Pektinlyasen), die eine zusätzliche pektinolytische Aktivitäten aufweisen, zur Verminderung der Viskosität des Tresters verwendet werden. Im Rahmen der Enzymbehandlung kann zweckmäßigerweise zusätzlich eine Entbitterung vorgenommen werden. Dazu wird der Trester mit Enzymen oder Enzymformulierungen behandelt, die entbitternde Nebenaktivitäten aufweisen, insbesondere mit ß-Glucosidasen und/oder Esterasen.

Weiterhin betrifft die vorliegende Erfindung eine gemäß diesem Verfahren erhältliche Olivenpaste oder ein Olivenpulver.

Eine Olivenpaste oder ein Olivenpulver, das im Wesentlichen frei von Olivensteinpartikeln ist und das einen Gesamtphenolgehalt (TPC) von mindestens 10 mmol Gallussäureäquivalenten/kg Trockensubstanz (mmol GAE/kg TS) aufweist, wird auch offenbart.

Weiterhin wird die Verwendung der vorstehend beschriebenen Olivenpaste oder des Olivenpulvers als Nahrungsmittel, Nahrungsergänzungsmittel oder als Zutat für ein Nahrungsmittel, vorzugsweise als Zutat für Backwaren, Aufstriche oder Pasta-Produkte, sowie in der Tiernahrung offenbart.

Weitere vorteilhafte Ausgestaltungen der Erfindung ergeben sich aus den Unteransprüchen.

In einer bevorzugten Ausführungsform handelt es sich bei dem Enzympräparat um eine Cellulase oder eine Hemicellulase, die pektinabbauende Enzym-Aktivitäten umfasst, oder um eine Mischung von mindestens einer Cellulase oder Hemicellulase mit mindestens einer Pektinase, womit die im Oliventrester enthaltene Cellulose bzw. Hemicellulose und die enthaltenen Pektine gespalten werden. Im Rahmen dieser Erfindung verwendbare Cellulasen können beispielsweise aus dem Pilz *Trichoderma reesei* gewonnen werden und sind unter der Bezeichnung Celluclast^{®} 1,5 L von Novozymes (Bagsvaerd, Dänemark) kommerziell erhältlich. Geeignete Pektinasen sind beispielsweise aus dem Mikroorganismus *Aspergillus aculeatus* erhältlich und werden unter der Bezeichnung Pektinex^{®} Ultra SP-L von Novozymes (Bagsvaerd, Dänemark) vertrieben. Weitere geeignete Pektinasen sind unter den Bezeichnungen Novozym^{®} 33095 von Novozymes (Bagsvaerd, Dänemark) oder Oleazym B3 von Erbslöh (Geisenheim, Deutschland) erhältlich. Diese Enzyme weisen zusätzlich zu ihrer Funktion als Pektinase eine Hemicellulasenebenaktivität auf, wobei die pektinolytischen Aktivitäten und die (hemi)cellulolytsichen Aktivitäten generell als komplementär einzustufen sind. Zur gleichzeitigen Entbitterung sind beispielsweise Enzymformulierungen wie Olivex^{®} von Novozymes (Bagsvaerd, Dänemark), β-Glucosidase aus Mandeln von Sigma-Aldrich GmbH (Steinheim, Deutschland), Teazyme C™ von Quest (Birmingham, UK) und Laccase™ von Novozymes (Bagsvaerd, Dänemark) geeignet.

Im Rahmen der vorliegenden Erfindung hat es sich als vorteilhaft herausgestellt, wenn neben der mindestens einen Cellulase oder Hemicellulase mindestens eine Pektinase in die Enzymbehandlung des Tresters einbezogen wird. Die beiden bezeichneten Enzymtypen wirken im Rahmen der Erfindung, indem sie makromolekulare Matrixverbindungen des Oliventresters, wie Cellulose, Hemicellulose und Pektine, abbauen, so dass anschließend eine mechanische Trennung von Olivensteinfragmenten durch Passieren des enzymatischen Digests durch ein Sieb mit einer geeigneten Maschenweite, um mindestens 98 Gew.-% der Olivensteinpartikel aus dem Produkt zu entfernen, erfolgen kann. Durch die Enzymierung wird die Viskosität der viskosen Masse von > 100 Pa·s auf vorzugsweise < 10 Pa·s, besonders bevorzugt auf < 5 Pa·s und ganz besonders bevorzugt auf < 1 Pa·s herabgesetzt. Die Viskosität bestimmt sich im Rahmen dieser Erfindung mit einem Bohlin Rheometer mit Platten-Platten Geometrie, einem Plattendurchmesser von 40 mm, einem Messspalt von 1000, bei einer Temperatur von 25 °C und einer Schergeschwindigkeit von 10/s. Ohne Enzymbehandlung lässt sich dies aufgrund der hohen Viskosität des Tresters nicht oder nur mit deutlich höherem Energieaufwand bei deutlich geringerer Ausbeute bewerkstelligen.

Im Rahmen der vorliegenden Erfindung führt die Behandlung des Oliventresters mit dem mindestens einen Enzym zu einer Verminderung der Viskosität des Ausgangsmaterials um mindestens den Faktor 2, vorzugsweise um mindestens den Faktor 5, besonders bevorzugt um mindestens den Faktor 10, und am meisten bevorzugt um mindestens den Faktor 50.

Im Rahmen der vorliegenden Erfindung ist es weiterhin bevorzugt, wenn der Oliventrester der Enzymbehandlung bei einer Temperatur im Bereich von 15 bis 80 °C, vorzugsweise im Bereich von 20 bis 60 °C und besonders bevorzugt von 40 bis 60 °C unterzogen wird. Bei der Bestimmung des optimalen Temperaturbereichs ist neben diesen konkreten Angaben auch die optimale Aktivitätstemperatur der eingesetzten Enzyme zu berücksichtigen.

Weiterhin ist es bevorzugt, wenn der Oliventrester für einen Zeitraum im Bereich von 0,5 bis 5 Stunden und vorzugsweise 1 bis 2 Stunden mit dem wenigstens einen Enzym behandelt wird. Im Rahmen der vorliegenden Erfindung hat es sich gezeigt, dass der Zeitraum der Enzymbehandlung einen wesentlichen Einfluss auf die Viskositätsverminderung des Produkts hat. So zeigt sich, dass bei einer Behandlung von mehr als 5 Stunden, zwar die Viskosität des behandelten Tresters weiter abnimmt, jedoch findet dann eine höhere Polyphenoloxidation statt, die zu einem Verlust der funktionellen Wirkung dieser Stoffe führt. Im Rahmen der vorliegenden Erfindung hat es sich daher gezeigt, dass insbesondere ein Zeitraum von 1 bis 2 Stunden einen optimalen Kompromiss zwischen der Viskositätsminderung und dem Ausmaß der Polyphenoloxidation darstellt.

Im Rahmen der vorliegenden Erfindung hat es sich weiterhin gezeigt, dass vorteilhafte Ergebnisse bei der Verwendung von Enzymen in einer Konzentration von 500 bis 4000 ppm, vorzugsweise von 700 bis 3500 ppm, und am meisten bevorzugt von etwa 1000 ppm, bezogen auf das Gewicht des Oliventresters, erzielt werden können. Durch Zugabe von weniger als 500 ppm kann die Ausbeute an Polyphenolen nicht signifikant gegenüber der Ausbeute ohne Enzym gesteigert werden. Bei zu geringen Enzymzugaben ist die Viskositätsverminderung zu langsam, so dass bis zu einer für das Sieben geeigneten Viskosität eine zu starke Phenoloxidation auftritt. Andererseits führen Enzymkonzentrationen von mehr als 2500 ppm gegenüber einer Zugabe von etwa 1000 ppm nicht zu einer signifikant gesteigerten Ausbeute an Polyphenolen, die den Kostennachteil des zusätzlichen Enzyms aufwiegen könnten. Als optimale Enzymkonzentration hat sich im Rahmen der vorliegenden Erfindung eine Konzentration von etwa 1000 ppm herausgestellt.

Die Ausgangsmaterialien, die im Rahmen der vorliegenden Erfindung zur Herstellung von entsprechenden Olivenprodukten herangezogen werden können, sind unterschiedliche Typen von Trestern, die bei der traditionellen Olivenölpressung ("orujo") anfallen oder als feste Abfallstoffe des Drei- oder Zwei-Phasen-Dekanter-Verfahrens ("orujo" und "alpeorujo") entstehen. Die Feuchtigkeit solcher Ausgangsmaterialien kann im Bereich von 50 bis 80 Gewichts-% liegen, vorzugsweise von 60 und 75 Gewichts-%, und am meisten bevorzugt von 64 und 70 Gewichts-%. Die vorstehende Feuchtigkeit (der Wassergehalt) bestimmt sich gravimetrisch als der Verlust nach der Trocknung einer Probe von 3 g unter Verwendung eines automatischen Infrarotfeuchtigkeitsanalysators.

Die Fettgehalte der Ausgangsmaterialien liegen vorzugsweise im Bereich von 3 bis 20 Gewichts-%. Diese Fettgehalte werden im Rahmen der vorliegenden Erfindung gravimetrisch nach Soxhlet-Extraktion der lipophilen Bestandteile aus den Proben unter Verwendung von Hexan bestimmt, wie es in Matissek & Steiner (2006) beschrieben ist.

Im Rahmen der vorliegenden Erfindung hat es sich gezeigt, dass der als Ausgangsmaterial zu verwendende Oliventrester vorzugsweise das Produkt eines Zwei-Phasen-Dekanter-Verfahrens ist. Im Vergleich mit Trestern aus dem Drei-Phasen-Dekanter-Verfahren wurden für dieses Ausgangsmaterial substantiell höhere Mengen an Polyphenolen erhalten. Dies ist auf die geringere Auslaugung der Trester aus dem Zwei-Phasen-Dekanter-Prozess zurückzuführen.

Im Rahmen des hier beschriebenen Verfahrens ist es weiterhin zweckmäßig, wenn der Wassergehalt des Oliventresters vor der Enzymbehandlung auf 10 bis 35 Gew.-%, vorzugsweise auf 20 bis 30 Gew.-%, bezogen auf das Trockengewicht des Oliventresters, eingestellt wird.

Weiterhin ist es vorteilhaft, wenn die Olivenpaste, die nach der Enzymbehandlung erhalten wird, im Rahmen der vorliegenden Erfindung pasteurisiert oder sterilisiert wird. Für die Pasteurisation kann dem Rohprodukt zunächst eine Säure, besonders bevorzugt Essigsäure oder Essig, oder eine Säure, ausgewählt aus Zitronensäure, Milchsäure, Äpfelsäure und Weinsäure oder einem Gemisch davon, zugesetzt werden. Anschließend wird das Produkt bei erhöhter Temperatur, vorzugsweise von mehr als 80 °C, und insbesondere von etwa 90 °C, pasteurisiert. Dies kann zweckmäßig in einem Autoklaven erfolgen, besonders bevorzugt in einem Rotationsautoklaven, oder auch kontinuierlich, zum Beispiel in einem Röhrenerhitzer, erfolgen. Alternativ kann die Ansäuerung auch durch biologische Säuerung, beispielsweise durch Lactofermentierung der Olivenpaste mit oder ohne Zugabe von Starterkulturen, wie beispielsweise *Lactobacillus spec.,* herbeigeführt werden, um einen pH < 4,5 vor der Pasteurisierung einzustellen.

Für die vorliegende Erfindung ist es nicht von wesentlicher Bedeutung, ob das Pasteurisieren direkt nach der Enzymbehandlung erfolgt, oder erst nach dem Sieben über ein Sieb mit einer geeigneten Maschenweite um mindestens 98 Gew.-% der Olivensteinpartikel aus dem Produkt zu entfernen, wobei ein Pasteurisieren nach dem Sieben bevorzugt ist, da in diesem Fall weniger Olivensteinpartikel vorhanden sind und somit die zu erhitzende Masse geringer ist als vor dem Entfernen der Olivensteinpartikel. Daher ist auch der Energieaufwand in diesem Fall geringer.

Der Fachmann ist sich im Klaren darüber, das die Menge des durch das Sieb zurückgehaltenen Olivensteinmaterials wesentlich von dessen Partikelgröße abhängt. Daher ist in der Ausführungsform der vorliegenden Erfindung die Maschenweite des Siebs derart, dass damit mindestens 98 Gew.-%, bevorzugt mindestens 99 Gew.-%, und besonders bevorzugt mindestens 99,9 Gew.-% des Olivensteinmaterials entfernt werden können.

Wird als Ausgangmaterial ein handelsüblicher Oliventrester verwendet, so beträgt die Maschenweite des Siebs vorzugsweise etwa 0,4 mm oder weniger, besonders bevorzugt etwa 0,2 bis 0,075 mm, ganz besonders bevorzugt etwa 0,075 bis 0,025 mm, und am meisten bevorzugt 0,025 mm.

Alternativ kann das Produkt nach der Enzymbehandlung auch sterilisiert werden, wobei dies zweckmäßig ohne vorherige Ansäuerung durch Erhitzung in einem Rotationsautoklaven erfolgen kann. Auch bei einer Sterilisation ist es aus den oben bezeichneten Gründen bevorzugt, wenn diese erst nach dem Sieben erfolgt. Grundsätzlich ist es jedoch auch möglich, eine Sterilisation vor dem Sieben vorzunehmen.

Zur Herstellung eines Olivenpulvers kann das nach dem Sieben erhaltene Produkt getrocknet werden. Vorzugsweise erfolgt das Trocknen bei einer Temperatur im Bereich von 40 bis 100 °C, insbesondere bei einer Temperatur im Bereich von 50 bis 80 °C und besonders bevorzugt bei einer Temperatur von etwa 60 °C. Das Trocknen erfolgt weiterhin bevorzugt für einen Zeitraum, bis das Produkt im Wesentlichen trocken ist, d. h. im Rahmen der vorliegenden Erfindung vorzugsweise für einen Zeitraum im Bereich von 30 min bis 24 h und vorzugsweise 2 bis 8 h. Das Trocknen erfolgt vorzugsweise in einem Umlufttrockner oder durch Sprühtrocknung.

Um ein Produkt mit besserer Korngrößenverteilung erhalten zu können, kann es weiterhin zweckmäßig sein, wenn das nach dem Trocknen erhaltene Produkt einem anschließenden Prozess eines Mahlens unterzogen wird.

Mit dem vorstehend beschriebenen Verfahren ist es möglich, im Rahmen eines kostengünstigen Verfahrens mit geringem apparativen Aufwand Olivenpasten oder -pulver zu erhalten. Demzufolge ist es im Rahmen der vorliegenden Erfindung bevorzugt, dass das Verfahren keine kosten- oder energieintensiven Schritte aufweist. Insbesondere weist das erfindungsgemäße Verfahren vorzugsweise keinen Schritt eines Mahlens, der bei Temperaturen von weniger als 23 °C durchgeführt wird (kryogenes Mahlen) und keinen Schritt des Vakuumtrocknens auf.

Die Olivenpaste oder das Olivenpulver ist im Wesentlichen frei von Olivensteinpartikeln einer Partikelgröße von mehr als 0,40 mm, vorzugsweise von mehr als 0,075 bis 0,2 mm, ganz besonders bevorzugt von mehr als 0,025 bis 0,075 mm, und am meisten bevorzugt von mehr als 0,025 mm und weist einen Gesamtphenolgehalt (TPC) von mindestens 10 mmol Gallussäureäquivalenten/kg Trockensubstanz (mmol GAE/kg TS), vorzugsweise von mindestens 50 mmol GAE/kg TS, noch mehr bevorzugt von mindestens 80 mmol GAE/kg TS und am meisten bevorzugt von mindestens 90 mmol GAE/kg TS, auf. Zusätzlich zeichnen sich diese Olivenpasten vorzugsweise durch ein antioxidatives Potential, bestimmt gemäß dem Trolox-Equivalent-Antioxidant-Capacity (TEAC)-Assay von mindestens 10 mmol Troloxäquivalenten pro kg Trockenmasse (mmol TE/kg TS), vorzugsweise von mindestens 40 mmol TE/kg TS und noch mehr bevorzugt von mindestens 60 mmol TE/kg TS, aus. Weiterhin ist es bevorzugt, wenn diese Olivenpaste oder das Olivenpulver weniger als 2 Gew.-%, besonders bevorzugt weniger als 1 Gew.-%, noch mehr bevorzugt weniger als 0,1 Gew.-% an Olivensteinpartikeln, bezogen auf die Trockenmasse der Olivenpaste oder des Olivenpulvers, enthält. Am meisten bevorzugt ist es, wenn die Olivenpaste oder das Olivenpulver keine nachweisbaren Mengen an Olivensteinpartikeln enthält.

Die Verwendung einer entbitterten Olivenpaste oder eines Olivenpulvers, wie vorstehend beschrieben, als Nahrungsmittel, Nahrungsergänzungsmittel, oder als Zutat für ein Nahrungsmittel, vorzugsweise als Zutat für Backwaren, Aufstriche oder Pasta-Produkte, sowie in der Tiernahrung, wird offenbart. In einer besonders bevorzugten Ausführungsform besteht die Verwendung in einer Verwendung zur Hemmung oder Unterdrückung des Wachstums von Bakterien und Schimmelpilzen (Faiza et al. (2011)), wofür die Olivenpaste oder das Olivenpulver in entsprechenden Mengen als Zutat eingesetzt wird.

### Literatur:

Azabar, N., Bayram, A., Filibeli, A., Muezzinoglu, A., Sengul, F. & Ozer, A. (2004) Critical Reviws in Environmental Science and Technology, 34, 209-247.
Benzie I. F.F. & Strain, J.J. (1996) Analytical Biochemistry, 239, 70-76.
Engelen, L., de Wijk, R. A., van der Bilt, A., Prinz, J. F., Janssen, A. M., & Bosmann, F. (2005) Relating particles and texture perception, Physiology &
Behaviour, **86,** 111-117
FAIZA; I; Wahibi; K., Nassira, G., Chahrazed, B. & Atik, B.F. (2011) Journal of Microbiology and Biotechnology Research, 1, 69-73.
Huang, D., Boxin, O.U. & Prior, R.L. (2005) Journal of Agricultural and Food Chemistry, 53, 1841-1856.
Matissek, R. & Steiner, G. (2006)Lebensmittelanalytik, 3. Aufl., Springer-Verlag Berlin, Heidelberg, New York, S. 28-30
Roig, A., Cayuela, M.L. & Sänchez-Monedero, M.A. (1998) Waste Management, 26, 960-969.
Sanchez-Moreno, C. (2002) Food Science and Technology International, 8, 121-137.
Singleton, V. L., Orthofer, R. & Lamuela-Raventos, R. M. (1998) Methods in Enzymology, 299, 152-178.
van den Berg, R., Haenen, G. R. M. M., van den Berg, H. & Bast, A. (1999), Food Chemistry, 66, 511-517.
Vlyssides, A. G. Loizidou, M. Gimouhopoulos, K. & Zorpas, A. (1998) Fresenius Environmental Bulletin, 7, 308-313.

Im Folgenden wird die vorliegende Erfindung durch Beispiele näher illustriert, die jedoch nicht den Schutzumfang beeinträchtigen sollen.

### Beispiele

### Beispiel 1:

Als Ausgangsmaterial wurden zwei verschiedene Oliventrester verwendet, von denen der erste auf Sevilla-Oliven und der zweite auf Grossetto-Oliven beruhte. Der von Sevilla-Oliven stammende Trester war das Produkt eines Zwei-Phasen-Dekanter-Verfahrens, während der aus Grossetto-Oliven erhaltene Trester das Produkt eines Drei-Phasen-Dekanter-Verfahrens darstellt. Alle Trester wurden wie folgt behandelt:
Zunächst wurden 1000 g des Oliventresters auf einen Feuchtegehalt von etwa 25 % (Sevilla-Trester) bzw. 30 % (Grossetto-Trester) eingestellt. Anschließend wurden 1000 ppm einer 1:1-Mischung aus Celluclast^{®} 1,5 L und Novozym^{®} 33095 zugegeben und die Mischung wurde für 2 Stunden bei 40 °C mit den Enzymen behandelt. Anschließend wurde die Mischung bei 90 °C für 5 Minuten pasteurisiert.

Das erhaltene Produkt wurde über ein Sieb mit 0,025 mm Maschenweite gesiebt, wodurch 770 g einer Olivenpaste erhalten wurden. Ein Teil der erhaltenen Olivenpaste wurde anschließend mit einem Umluftofen für 3 bis 4 Stunden auf 60 °C erhitzt und getrocknet. Anschließend wurde das erhaltene Produkt gemahlen, wobei etwa 130 g (bezogen auf 770 g Olivenpaste) des Endprodukts erhalten wurden.

Die erhaltenen Produkte wurden hinsichtlich ihres Gehalts an Olivensteinfragmenten untersucht. Dabei wurde die Partikelgröße durch mikroskopische Inspektion von mit Phloroglucin/HCl angefärbten Proben (3 mg, aufgelöst in einem Wassertropfen) bestimmt, mit denen die Olivensteinbestandteile im Produkt rot angefärbt wurden. Dafür wurde frisch hergestellte Phloroglucin-Färbelösung, zusammengesetzt aus 16 %-igem Ethanol, 10 %-iger HCl (jeweils v/v) und 20 mg/ ml Phloroglucin, verwendet. Im Rahmen der visuellen Prüfung auf Olivensteinfragmente konnten in allen Proben nach dem Sieben keine Olivensteinfragmente einer Partikelgröße von mehr als 0,025 mm festgestellt werden.

Weiterhin wurden die erhaltenen Olivenpasten und Olivenpulver hinsichtlich ihres Gesamtphenolgehalts untersucht. Dazu wurde der Folin-Ciocalteu Assay unter Verwendung der Vorschrift von Singleton et al. (1998) verwendet. Zur photometrischen Bestimmung des antioxidativen Potentials wurde der FRAP-Assay sowie der TEAC-Assay verwendet. Der FRAP-Assay basierte auf der Reduktion eines Fe³⁺-TPTZ-(2,4,6-tris[2-pyridyl]-s-triazin)-Komplexes im sauren Milieu zu einem Fe²⁺-Komplex. In der Probe enthaltene Antioxidantien wirken dabei als Reduktionsmittel. Der entstehende Komplex ist blau und zeigt ein Absorptionsmaximum von 593 nm. Der Assay wurde wie in Benzie & Strain (1996) beschrieben durchgeführt.

Der TEAC-Assay basiert auf dem Abfangen eines grünen ABTS^{·+}-(2,2'-Azinobis[3-ethylbenzothiazolin-6-sulphonat])-Radikalions, was zu einer Absorptionsabnahme bei 734 nm führt. Das Radikalion wird im neutralen Bereich aus ABTS²⁻-Ionen in Anwesenheit der zu untersuchenden Antioxidantien gebildet (Sanchez-Moreno, 2002; Huang et al., 2005). Der TEAC-Assay wurde wie in van den Berg at al. (1999) beschrieben durchgeführt.

Die Ergebnisse dieser Bestimmungen sind in der folgenden Tabelle 1 aufgeführt.

**Tabelle 1:**

| | | Folin-Ciocalteu [mmol GAE/kg TS] | FRAP [mmol TE/kg TS] | TEAC [mmol TE/kg TS] |
|---|---|---|---|---|
| Sevilla | Trester | 62,1 ± 1,6 | 45,7 ± 0,8 | 140,5 ± 2,6 |
| | Paste | 91,8 ± 5,6 | 67,4 ± 0,8 | 202,5 ± 19,9 |
| | Olivensteinanteil | 11,9 ± 0,6 | 14,0 ± 0,6 | 28,9 ± 2,0 |
| | Pulver | 98,6 ± 9,0 | 61,1 ± 1,2 | 195,0 ± 7,0 |
| Grosseto | Trester | 3,1 ± 0,4 | 3,5 ± 0,3 | 3,1 ± 0,9 |
| | Paste | 13,8 ± 2,2 | 12,9 ± 0,6 | 17,2 ± 2,1 |
| | Olivensteinanteil | 1,9 ± 0,3 | 1,7 ± 0,2 | 0,6 ± 0,5 |
| | Pulver | 10,3 ± 2,9 | 9,6 ± 1,5 | 13,8 ± 3,0 |

Es zeigt sich, dass der Gesamtphenolgehalt der Ausgangsmaterialien, die für ein Verfahren gemäß der vorliegenden Erfindung geeignet sind, im Bereich von 3 bis 65 mmol Gallussäureäquivalenten/kg TS variiert, während der Gesamtphenolgehalt der Olivenpaste und des Olivenpulvers, das nach dem Entfernen der Olivensteinfragmente erhalten wird, signifikant höher, d. h. im Bereich von 10 bis 100 mmol für die Olivenpaste und im Bereich von 10 bis 150 mmol für das Pulver liegt.

Die antioxidativen Aktivitäten der Ausgangsmaterialien, die mit dem FRAP- und TEAC-Assay bestimmt wurden, lagen im Bereich von 3 bis 60 mmol Trolox-Äquivalent (TE)/kg Trockensubstanz (TS) bzw. 1 bis 150 Trolox-Äquivalenten/kg Trockensubstanz. Nach Abtrennung der Olivensteinfragmente gemäß der Erfindung lagen die antioxidativen Aktivitäten wesentlich höher, d. h. zwischen 10 und 80 TE/kg TS für die Olivenpaste und zwischen 20 und 250 TE/kg TS, je nachdem, ob der FRAP- oder der TEAC-Assay zur Bestimmung verwendet wurde. Dieselben Bereiche zeigten sich für die Pulver nach dem Trocknen der Olivenpasten. Es zeigte sich weiterhin, dass der Gesamtphenolgehalt und das antioxidative Potential der erhaltenen Olivenpasten und Olivenpulver wesentlich davon abhängen, ob die Ausgangsprodukte nach dem Zwei-Phasen- oder Drei-Phasen-Verfahren gewonnen wurden. Dabei zeigten sich für die aus den Zwei-Phasen-Verfahren gewonnenen Trester in allen Fällen wesentlich höhere Aktivitäten und wesentlich höherer Phenolgehalte als bei entsprechenden nach einem Drei-Phasen-Prozess gewonnenen Trestern.

### Beispiel 2

Aus Ausgangsmaterial wurde der Sevilla-Oliventrester aus Beispiel 1 verwendet. Dieser Trester wurde auf einen Feuchtegehalt von 25 % eingestellt und mit verschiedenen Enzymen und Enzymmischungen für einen Zeitraum von 2 h bei 40 °C behandelt. Die Menge an zugesetztem Enzym/zugesetzter Enzymmischung betrug in allen Fällen 2500 ppm. Anschließend wurde das erhaltene Produkt über ein Sieb mit 0,025 mm Maschenweite passiert und die erhaltene Produktmenge gewogen. Die Ergebnisse der Versuche sind in der folgenden Tabelle 2 wiedergegeben. Zum Vergleich wurde ein unbehandelter Sevilla-Oliventrester herangezogen.

**Tabelle 2**

| Trester | Enzympräparat | Ausbeute an steinfreier Trockensubstanz [%] |
|---|---|---|
| Sevilla (unbehandelt) | - | 68,6 ± 0,1 |
| Sevilla | Novozym^{®} 33095 | 82,6 ± 0,5 |
| Sevilla | Oleazym P3 | 84,4 ± 0,4 |
| Sevilla | Pectinex^{®} Ultra SP-L | 81,3 ± 0,4 |
| Sevilla | Celluclast^{®} 1,5 L+ Novozym^{®} 33095 | 88,2 ± 0,1 |

Es zeigt sich, dass mit allen Enzymen die Ausbeute an steinfreier Trockensubstanz erheblich gegenüber dem unbehandelten Trester gesteigert werden kann. Bei Verwendung eines Gemischs aus Celluclast^{®} 1,5 L und Novozym^{®} 33095 (1:1) wurde zudem die höchste Ausbeute erzielt.

### Beispiel 3

2500 g Oliventrester (gewonnnen aus Sevilla-Oliven), erhalten durch ein Zwei-Phasen-Dekanter-Verfahren, wurden auf einen Feuchtgehalt von 25 % eingestellt und nachfolgend mit 500 ppm Novozym^{®} 33095 (Novozyme, Bagsvaerd, Dänemark), 500 ppm Celluclast^{®} 1,5 L (Novozyme, Bagsvaerd, Dänemark) und 100 ppm β-Glucosidase aus Mandeln (Sigma-Aldrich, Steinheim, Deutschland) für 5 h bei 40°C unter Rühren (30 rpm) behandelt. Anschließend wurde der Oliventrester über ein Sieb der Maschenweite von 0,025 mm passiert. Durch Pasteurisieren für 5 min bei 90°C wurden die zugesetzten Enzyme inaktiviert. Die entbitternde Wirkung wurde durch Vergleich der relativen Signalflächen der freigesetzten Oleuropein-Abbauprodukte Hydroxytyrosol (HT) und Kaffeesäure (CA) bei einer unbehandelten Kontrolle (keine Enzymzugabe), einer Referenzprobe (von Dorridge Solihull, GB), die nach dem Verfahren der WO 2004/110171 behandelt wurde, und einer erfindungsgemäßen, entbitterten Probe, quantifiziert. Das erfindungsgemäße Verfahren zeigte im Vergleich zur Referenz- und Kontrollprobe eine überlegene entbitternde Wirkung, die durch sensorische Bewertung ("sensory panel evaluation") bestätigt wurde.

**Tabelle 3**

| | HT | CA |
|---|---|---|
| Kontrolle | 2080 | 1090 |
| Referenz-Probe | 4070 | 200 |
| Entbitterte Probe | 11500 | 4100 |

## Patentansprüche

1. Verfahren zur Herstellung einer Olivenpaste oder eines Olivenpulvers, die bzw. das im Wesentlichen frei von Olivensteinpartikeln ist, umfassend:
- die Behandlung von Oliventrester mit mindestens einem Enzym, das die Viskosität des Tresters um mindestens den Faktor 2 vermindert, und
- das Passieren des erhaltenen Produkts durch ein Sieb mit einer geeigneten Maschenweite um mindestens 98 Gew.-% der Olivensteinpartikel aus dem Produkt zu entfernen.

2. Verfahren gemäß Anspruch 1, **dadurch gekennzeichnet, dass** das mindestens eine Enzym eine Cellulase oder Hemicellulase mit pektinabbauender Aktivität oder eine Mischung von mindestens einer Cellulase oder Hemicellulase und mindestens einer Pektinase umfasst.

3. Verfahren nach Anspruch 1 oder 2, **dadurch gekennzeichnet, dass** im Rahmen der Enzymbehandlung zusätzliche Enzyme verwendet werden, die entbitternde Aktivitäten aufweisen, bevorzugt ß-Glucosidasen und/oder Esterasen.

4. Verfahren gemäß einem der Ansprüche 1 bis 3, **dadurch gekennzeichnet, dass** der Oliventrester der Enzymbehandlung bei einer Temperatur im Bereich von 15 bis 80°C, vorzugsweise von 20 bis 60°C und insbesondere von 40 bis 60°C, unterzogen wird.

5. Verfahren gemäß einem der Ansprüche 1 bis 4, **dadurch gekennzeichnet, dass** der Oliventrester für einen Zeitraum von 0,5 bis 5 Stunden, vorzugsweise von 1 bis 2 Stunden, mit dem mindestens einen Enzym behandelt wird.

6. Verfahren gemäß einem der vorstehenden Ansprüche, **dadurch gekennzeichnet, dass** das mindestens eine Enzym in einer Konzentration von 500 bis 4000 ppm, vorzugsweise von 700 bis 2500 ppm, und am meisten bevorzugt von etwa 1000 ppm, zum Oliventrester zugegeben wird.

7. Verfahren gemäß einem der vorstehenden Ansprüche, **dadurch gekennzeichnet, dass** der verwendete Oliventrester bevorzugt das Produkt eines Zwei-Phasen-Dekanter-Verfahrens ist.

8. Verfahren gemäß einem der vorstehenden Ansprüche, **dadurch gekennzeichnet, dass** der Wassergehalt des Oliventresters vor der Enzymbehandlung auf 10 bis 35 %, vorzugsweise auf 20 bis 30 %, bezogen auf das Trockengewicht des Oliventresters, eingestellt wird.

9. Verfahren gemäß einem der vorstehenden Ansprüche, **dadurch gekennzeichnet, dass** die Olivenpaste nach der Enzymbehandlung pasteurisiert oder sterilisiert wird.

10. Verfahren gemäß einem der vorstehenden Ansprüche, **dadurch gekennzeichnet, dass** das Produkt nach dem Sieben getrocknet wird, vorzugsweise bei einer Temperatur im Bereich von 40 bis 100°C.

11. Verfahren gemäß einem der vorstehenden Ansprüche, **dadurch gekennzeichnet, dass** das Produkt in einem Umlufttrockner oder durch Sprühtrocknung getrocknet wird.

12. Verfahren gemäß Anspruch 10 oder 11, **dadurch gekennzeichnet, dass** das getrocknete Produkt bei Bedarf gemahlen wird.

## Claims

1. A method for producing an olive paste or an olive powder which is substantially free from olive stone particles, comprising:
- treating olive pomace with at least one enzyme which reduces the viscosity of the pomace by at least factor 2, and
- passing the product which is obtained through a sieve of a suitable mesh width in order to remove at least 98 % of the olive stone particles from the product.

2. A method according to claim 1, **characterised in that** the at least one enzyme comprises a cellulase or hemicellulase having a pectin-degrading activity or a mixture of at least one cellulase or hemicellulase and at least one pectinase.

3. A method according to claim 1 or claim 2, **characterised in that** additional enzymes which have a debittering activity, preferably β-glucosidases and/or esterases are used in the course of the enzyme treatment.

4. A method according to any one of claims 1 to 3, **characterised in that** the olive pomace is subjected to the enzyme treatment at a temperature within a range of 15 to 80°C, preferably from 20 to 60°C and especially from 40 to 60°C.

5. A method according to any one of claims 1 to 4, **characterised in that** the olive pomace is treated with the at least one enzyme for a period of 0.5 to 5 hours, preferably from 1 to 2 hours.

6. A method according to any one of the preceding claims, **characterised in that** the at least one enzyme is added to the olive pomace in a concentration of from 500 to 4000 ppm, preferably from 700 to 2500 ppm, and most preferably in a concentration of approximately 1000 ppm.

7. A method according to any one of the preceding claims, **characterised in that** the olive pomace which is used is preferably the product of a two-phase decanter method.

8. A method according to any one of the preceding claims, **characterised in that** the water content of the olive pomace is adjusted before the enzyme treatment to 10 to 35%, preferably to 20 to 30 %, based on the dry weight of the olive pomace.

9. A method according to any one of the preceding claims, **characterised in that** the olive pomace is pasteurised or sterilised after the enzyme treatment.

10. A method according to any one of the preceding claims, **characterised in that** after being sieved, the product is dried, preferably at a temperature within a range of 40 to 100°C.

11. A method according to any one of the preceding claims, **characterised in that** the product is dried in a circulating air dryer or by spray drying.

12. A method according to claim 10 or claim 11, **characterised in that** the dried product is ground if required.

## Revendications

1. Procédé de fabrication d'une pâte d'olives ou d'une poudre d'olives qui est sensiblement exempte de particules de noyaux d'olives, comprenant :
- le traitement du marc d'olives avec au moins une enzyme qui réduit d'au moins 2 fois la viscosité du marc, et
- le passage du produit obtenu à travers un tamis ayant une largeur de maille appropriée pour éliminer du produit au moins 98 % en poids des particules de noyaux d'olives.

2. Procédé selon la revendication 1, **caractérisé en ce qu'**au moins une enzyme comprend une cellulase ou une hémicellulase ayant une activité dégradant la pectine ou un mélange d'au moins une cellulase ou hémicellulase et d'au moins une pectinase.

3. Procédé selon la revendication 1 ou 2, **caractérisé en ce que**, dans le cadre du traitement enzymatique, des enzymes supplémentaires sont utilisées, qui présentent des activités réduisant l'amertume, de préférence des β-glucosidases et/ou des estérases.

4. Procédé selon l'une des revendications 1 à 3, **caractérisé en ce que** le marc d'olives est soumis au traitement enzymatique à une température dans la plage de 15 à 80°C, de préférence de 20 à 60°C, et en particulier de 40 à 60°C.

5. Procédé selon l'une des revendications 1 à 4, **caractérisé en ce que** le marc d'olives est traité pendant une durée de 0,5 à 5 heures, de préférence de 1 à 2 heures, avec l'au moins une enzyme.

6. Procédé selon l'une des revendications précédentes, **caractérisé en ce qu'**au moins une enzyme est ajoutée au marc d'olives en une concentration de 500 à 4000 ppm, de préférence de 700 à 2500 ppm, et la plupart du temps préférentiellement d'environ 1000 ppm.

7. Procédé selon l'une des revendications précédentes, **caractérisé en ce que** le marc d'olives utilisé est de préférence le produit d'un procédé de décantation en deux phases.

8. Procédé selon l'une des revendications précédentes, **caractérisé en ce que** la teneur en eau du marc d'olives avant le traitement enzymatique est ajustée dans une plage de 10 à 35 %, de préférence de 20 à 30 %, par rapport au poids sec du marc d'olives.

9. Procédé selon l'une des revendications précédentes, **caractérisé en ce que** la pâte d'olives est pasteurisée ou stérilisée après le traitement enzymatique.

10. Procédé selon l'une des revendications précédentes, **caractérisé en ce que** le produit est séché après le tamisage, de préférence à une température située dans la plage de 40 à 100 °C.

11. Procédé selon l'une des revendications précédentes, **caractérisé en ce que** le produit est séché dans un séchoir à air pulsé ou par séchage par pulvérisation.

12. Procédé selon la revendication 10 ou 11, **caractérisé en ce que** le produit séché est moulu si besoin est.
